(19) Europäisches Patentamt
European Patent Office
Office européen des brevets

(11) **EP 1 303 784 B1**

(12) **EUROPEAN PATENT SPECIFICATION**

(45) Date of publication and mention
of the grant of the patent:
**29.07.2015 Bulletin 2015/31**

(21) Application number: **01945854.6**

(22) Date of filing: **26.06.2001**

(51) Int Cl.:
***G02F 1/125*** *(2006.01)*

(86) International application number:
**PCT/SE2001/001415**

(87) International publication number:
**WO 2002/001282 (03.01.2002 Gazette 2002/01)**

(54) **METHOD AND ARRANGEMENT IN CONNECTION WITH OPTICAL BRAGG-REFLECTORS**

VERFAHREN UND ANORDNUNG IN VERBINDUNG MIT OPTISCHEN BRAGG-REFLEKTOREN

PROCEDE ET AGENCEMENT SE RAPPORTANT A DES REFLECTEURS BRAGG OPTIQUES

(84) Designated Contracting States:
**AT BE CH CY DE DK ES FI FR GB GR IE IT LI LU MC NL PT SE TR**

(30) Priority: **27.06.2000 SE 0002415**

(43) Date of publication of application:
**23.04.2003 Bulletin 2003/17**

(73) Proprietor: **Proximion Fiber Systems AB
164 40 Kista (SE)**

(72) Inventors:
• **ASSEH, Adel
S-116 39 Stockholm (SE)**

• **BERGMAN, Mikael
S-175 43 Järfälla (SE)**
• **SAHLGREN, Bengt
S-132 31 Saltsjö-Boo (SE)**
• **SANDGREN, Simon
S-112 54 Stockholm (SE)**
• **STUBBE, Raoul
S-182 75 Stocksund (SE)**

(74) Representative: **Pierrou, Mattias et al
Awapatent AB
P.O. Box 45 086
104 30 Stockholm (SE)**

(56) References cited:
**US-A- 6 052 179     US-A- 6 052 497**

**Description**

Technical field of the invention

The present invention relates to optical Bragg-reflectors, and more particularly to the alteration of the reflective properties of optical Bragg-reflectors.

Background of the invention

The need for capacity in communications networks is increasing exponentially, and presently the capacity demands are doubled every eighteen months or even less. Efforts are being made in the telecom and computer business to meet this incredible expansion of bandwidth requirements.

One obvious action is then to simply draw new optical cables between nodes of the network. However, this approach is costly and hardly a successful way of meeting the upcoming demands. Instead, measures are focused, when possible, on augmenting the capacity of existing fibre networks.

One widespread method of achieving increased transfer capacity in existing fibre networks is wavelength division multiplexing (WDM). In WDM, a single optical fibre is used for the transmission of several channels of information, each channel being associated with a specific wavelength. For a background of this technology, the reader is directed to "A review of WDM technology and applications", Opt. Fiber Technol., 5, pp. 3-39, (1999).

While the use of WDM in optical networks gives a substantial increase in transfer capacity, the complexity of the communications systems increases correspondingly. Furthermore, the number of physical components in each link of the network increases, the requirements on each component increase, and detecting and localising errors or imperfections in the network is rendered more difficult.

The optical networks of today mainly use point-to-point communication, wherein electronically encoded information in one node of the network is transformed into optically encoded information, and then transferred, through a sequence of optical fibre amplifiers and optical transport fibres, to another node, where the optically encoded information is transformed back into electrically encoded information.

However, this prior art is associated with major drawbacks and limitations.

If, for instance, an error occurs in one of the fibre amplifiers, it is very hard to determine which amplifier, in the sequence of amplifiers, that is the faulty one.

Furthermore, technology is being pushed towards communications systems, in which the optical signal is passed via all-optical switching nodes, where the signal is routed without any need for optical-to-electrical conversion or vice versa. Thus, if an error is detected in a receiving node of the communications network, it is extremely hard to localise the origin of error.

If the light signal propagating in an optical transport fibre could be analysed in an accurate and simple fashion, without interfering with the signal, any flaws in the optical communications network could be detected at an early stage. In the prior art, such analysis has been too complicated, too expensive and too inaccurate to gain widespread acceptance.

Obviously, it is of uttermost importance to be able to monitor the power spectrum of the light propagating in the optical transport fibre.

It is known in the prior art to use a phase grating in an optical fibre in order to filter out one desired wavelength from a broadband light signal. A phase grating will reflect one predefined wavelength and leave other wavelengths essentially undisturbed.

An optical phase grating is a structure of essentially periodically varying refractive index in an optically transparent medium. An overview of the technology is given in M. C. Hutley, "Diffraction gratings", Academic Press, London (1982). When light is incident on an optical phase grating, a small part of the incident light is reflected off each grating element (period). When a multiplicity of grating elements are arranged after each other (i.e. arranged as a phase grating), the total reflected light would be the sum of all these single reflections. The fraction of the incident light reflected off each grating element is determined by the depth (amplitude) of the refractive index modulation in the phase grating. The deeper the modulation is, the larger fraction of the incident light is reflected off each grating element. If the light is incident essentially normal to the grating (i.e. to the grating elements), the grating is said to act in the Bragg domain and is named Bragg grating. Light reflected off each grating element will thus overlap the light reflected off the other elements, causing interference. For a certain wavelength, all these reflections are in phase, whereby constructive interference is effected. Although each reflection is small, a substantial reflection is obtained due to the constructive interference. The wavelength for which constructive interference is effected is called the Bragg wavelength, $\lambda_{Bragg}$, and is given by (at normal angle of incidence)

$$\lambda_{bragg} = 2n\Lambda$$

where n is the average of the refractive index and $\Lambda$ is the grating period.

If the grating period, $\Lambda$, varies along the grating, the grating is said to be a chirped Bragg grating. In a chirped Bragg grating, different wavelengths are reflected in different portions of the grating, in fact making the Bragg grating a broadband reflector, a chirped Bragg-reflector.

US-A-6 052 179 discloses a system for determining the average wavelength of light transmitted through an optical fibre. In this system, a chirped Bragg grating is provided in an optical fibre, the grating having a modulation amplitude that varies from a first end to a second end of the fibre grating. Thus, the reflectivity at one wavelength is different from the reflectivity at another wavelength, since different wavelengths are reflected at different portions of the grating. Based on the output from two photo detectors - one detecting the light transmitted through the grating, the other acting as a reference - the average wavelength of the light transmitted through the grating is determined. However, this approach has several disadvantages. Firstly, the light to be analysed has to be divided into two separate fibres, which is a serious complication in itself. Secondly, only the average wavelength can be determined. There is no possibility for proper spectrum analysis by the system disclosed in the above reference. Furthermore, the system is intended for sensing applications, where external influence change the average wavelength coming into the system.

Previous attempts to alter the reflective properties of an optical Bragg grating include creation of an acousto-optic superlattice imposed on a chirped Bragg grating. Such an arrangement is described by Chen et al. in "Superchirped moire grating based on an acousto-optic superlattice with a chirped fiber Bragg grating", OPTICS LETTERS, Vol. 24, No. 22, pp. 1558-1560. According to this reference, multiple transmission peaks are obtained by superimposing an acoustic wave on a chirped Bragg grating. The spacing of the transmission peaks is varied by the acoustic frequency. However, this arrangement does not permit transmission of one single wavelength only, and the variation of the spacing of the transmission peaks by acoustic frequency is very limited. Such arrangement is also shown in US-A-5,982,963.

Summary of the invention

The present invention provides new methods and arrangements for establishing transmission of light through a reflecting Bragg grating, and for utilising such transmission for analysis of the characteristics of a light signal. The drawbacks and limitations associated with the prior art are effectively eliminated by a method and an arrangement of the general kind set forth in the accompanying claims.

The present invention has further advantages, which will be apparent from the specification set forth below.

It is a general object of the present invention to provide a method of establishing transmission of light through a broadband, chirped Bragg-reflector. The method can be used for analysis of the power spectrum of a light signal, as well as for other applications where it is desirable to transmit a certain wavelength component of light through a structure at a certain instant in time.

Furthermore, it is an object of the present invention to provide a method and an arrangement for spectrum analysis of a light signal, which method and arrangement essentially eliminate the aforementioned drawbacks and limitations of the prior art. Briefly stated, this is obtained by establishing transmission of light through a chirped Bragg-reflector by means of a longitudinal acoustic pulse being present in the grating structure. The presence of the acoustic pulse alters the reflective properties of the Bragg-reflector, thus giving rise to transmission of a specific wavelength of light for each position of the acoustic pulse in the Bragg-reflector.

According to a first aspect of the present invention, a method of establishing transmission of light through a chirped Bragg-reflector is provided, by which method a certain wavelength component is transmitted through the Bragg-reflector at a certain (corresponding) instant in time. In an unperturbed state, the Bragg-reflector is reflecting essentially all incident light within a predefined wavelength range. According to the invention, light is incident into an optical waveguide incorporating a chirped Bragg-reflector. The reflective properties of said Bragg-reflector are altered by sending a longitudinal acoustic pulse into said waveguide for propagation along the same. For each location of said acoustic pulse in the chirped Bragg-reflector, the reflectivity for a wavelength associated with said location in said Bragg-reflector is altered, thereby establishing transmission of the wavelength at issue.

According to a second aspect of the present invention, a new method of analysing the power spectrum of a light signal is provided. The method of analysing the power spectrum is based on the aforementioned method of establishing transmission of light through a chirped Bragg-reflector. Briefly stated, analysis of the power spectrum is obtained by monitoring the light transmitted through the Bragg-reflector, and by subsequent analysis of the monitored signal.

One advantage of this method is that it is sufficient to tap off only a small part (typically about, or less than, 1%) of the light propagating in an optical transport fibre into a secondary fibre. The light in the secondary fibre is then analysed, and the interfering effect on the transport fibre is negligible. The light is tapped off from the transport fibre by non-wavelength discriminating coupling means, as known in the art. By analysing the light in the secondary fibre by the method according to the present invention, very high accuracy is obtained in determining the power spectrum of the light signal propagating in said transport fibre. Furthermore, the light signal in the transport fibre is essentially undisturbed, apart from the 1% tapped off.

Another advantage of the present invention is that it also allows of real time supervision of a fibre based communications system. The information obtained from the supervision can advantageously be utilised for controlling other equipment connected to said system, such as amplifiers, filters, etc. In-line amplifiers and filters can be controlled in a feedback configuration with a spectrum analyser according to the present invention.

Yet another advantage of the present invention is that a wavelength scan of transmitted light is obtained, which is very convenient for spectrum analysis. The present invention can provide for repeated wavelength scans, thereby facilitating interpretation and analysis of the monitored signal.

According to a third aspect of the present invention, an arrangement for measuring and characterising the power spectrum of a light signal propagating in an optical fibre is provided. Such an arrangement includes a chirped Bragg-reflector operating in accordance with the methods above.

The present invention is based on the general insight that the reflective properties of a chirped Bragg grating (or chirped Bragg-reflector) can be altered by a longitudinal acoustic pulse propagating along the grating. More particularly, the present invention is further based on the deeper insight that a longitudinal acoustic pulse of carefully chosen shape propagating along the grating can give highly accurate, and wavelength separated in time, transmission through the chirped Bragg grating.

According to one embodiment of the present invention, a method of establishing transmission of light through a chirped Bragg-reflector includes the steps of directing light into a light guiding structure provided with said Bragg-reflector, and sending a longitudinal acoustic pulse along said light guiding structure, thereby locally and temporarily altering the reflective properties of the Bragg-reflector for a certain wavelength corresponding to the momentary position of the travelling acoustic pulse.

According to another embodiment of the present invention, an optical fibre is provided with a chirped Bragg grating. The fibre has an input end and an output end, for the input of a light signal into said fibre and for the output of a transmitted part of said light signal, respectively. Connected to the optical fibre is an acoustic actuator for the emission of a longitudinal acoustic pulse into said fibre. The acoustic pulse is given a shape that has the effect of lowering the reflectance of the chirped Bragg-reflector for a certain wavelength at a certain instant in time. Preferably, the acoustic pulse is given an anti-symmetric shape, whereby an etalon effect is achieved in the proximity of the travelling acoustic pulse, thereby locally lowering the reflectivity of the chirped Bragg-reflector to essentially zero.

It is to be understood that a chirped Bragg-reflector is a grating structure having a spatially varying grating period. This means that different wavelengths of light are in resonance (i.e. are reflected) at different portions of the Bragg-reflector. The grating period of the chirped Bragg-reflector may vary continuously, stepwise or in any other way. The term "chirped" does only specify that the period varies along the grating.

Furthermore, it is the effective grating period that is of interest. As known from before, the effective grating period is the actual physical period times the refractive index of the medium in which light propagates. Therefore, the effective grating period may be varied by means of a change in the actual physical period, by a change in refractive index, or by a combination of both.

Brief description of the drawings

The following detailed description of preferred embodiments is better understood when read in conjunction with the accompanying schematic drawings, in which:

Fig. 1 is a schematic outline of the basic principle behind the present invention,
Fig. 2 shows a typical transmittance profile of a chirped Bragg-reflector in an unperturbed state,
Fig. 3 illustrates a transmittance peak, caused by the presence of an acoustic pulse in the chirped Bragg-reflector, that sweeps through the reflectance band of the Bragg-reflector,
Fig. 4 shows a magnified picture of the transmittance peak caused by the presence of an acoustic pulse in the Bragg-reflector,
Fig. 5 shows an overview of an arrangement for spectrum analysis, according to the present invention,
Fig. 6 shows the acoustic actuator and the fibre arrangement, according to the present invention,
Figs. 7-9 shows the attachment of the fibre to the acoustic actuator in greater detail,
Fig. 10 shows the shape of an acoustic pulse in accordance with the present invention, and

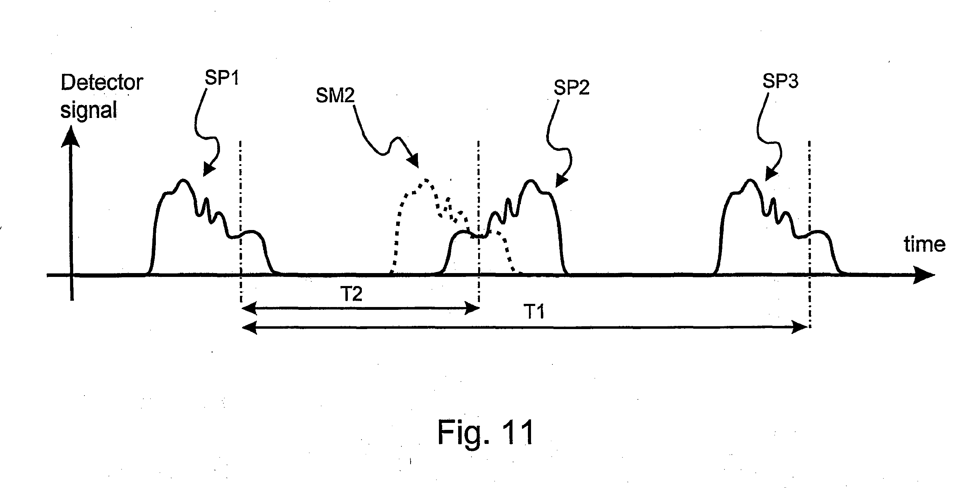

Fig. 11 shows a detector output signal, and illustrates a correlation interpretation method according to the present invention.

Detailed description of preferred embodiments

Typically, and in accordance with one embodiment of the present invention, a chirped Bragg-reflector is provided in an optical fibre. As described above, the chirped Bragg-reflector is a distributed structure that reflects light within a predefined wavelength range. The wavelength reflected in each portion of the distributed structure depends on the local period of the grating constituting the Bragg-reflector. The grating period is defined as the optical distance between two adjacent grating elements. The shorter the grating period is, the shorter is the wavelength that is reflected.

The vacuum wavelength $\lambda_{Bragg}$ of an optical wave that is locally in resonance with the grating is defined by $\lambda_{Bragg} = 2n_g(z)\Lambda_g(z)$, where $n_g(z)$ is the average refractive index of one grating period, $\Lambda_g(z)$ is the local physical grating period, and z is the spatial co-ordinate along the grating. Consequently, the resonance wavelength (i.e. the wavelength that is reflected at a particular portion of the grating) may be varied by means of a change in the actual physical period, by a change in the refractive index, or by a combination of both.

In a chirped grating, the grating period varies along the grating, usually in a steady fashion (e.g. from a short period to a longer period, or from a long period to a shorter period). The period can vary continuously or stepwise. In a portion of the grating (i.e. the chirped Bragg-reflector) where the grating period is short, a short wavelength is reflected, and in a portion of the grating where the grating period is long, a long wavelength is reflected. In effect, different wavelengths are reflected in different portions of the chirped Bragg-reflector.

Compression and/or elongation of the fibre can alter the reflective properties of the chirped Bragg-reflector. According to the present invention, this is accomplished by means of a longitudinal acoustic pulse, which causes a temporary compression and/or elongation of the fibre as it propagates along the fibre. In fact, such compression or elongation introduces both refractive index changes and actual path changes, the latter however being predominant. The aggregate effect on light is a combination of the change in refractive index and the change of the actual period of the grating in the fibre. From a phenomenological point of view, the crucial quantity is the optical path traversed by the light in the fibre. The optical path is defined as actual, physical path multiplied by the refractive index of the medium in which the light is propagating. For example, an increase of the effective grating period in a Bragg grating in an optical fibre could be obtained either by increasing the refractive index of the fibre, or by increasing the physical length of the period (i.e. the fibre).

When stretching or compressing an optical fibre provided with a Bragg-reflector, the change in refractive index is negligible compared to the actual change in physical path. Therefore, if any portion of a chirped Bragg-reflector is stretched, this portion will reflect a longer wavelength than it would do in its unperturbed state. This actually applies for any Bragg-reflector, even with a constant grating period.

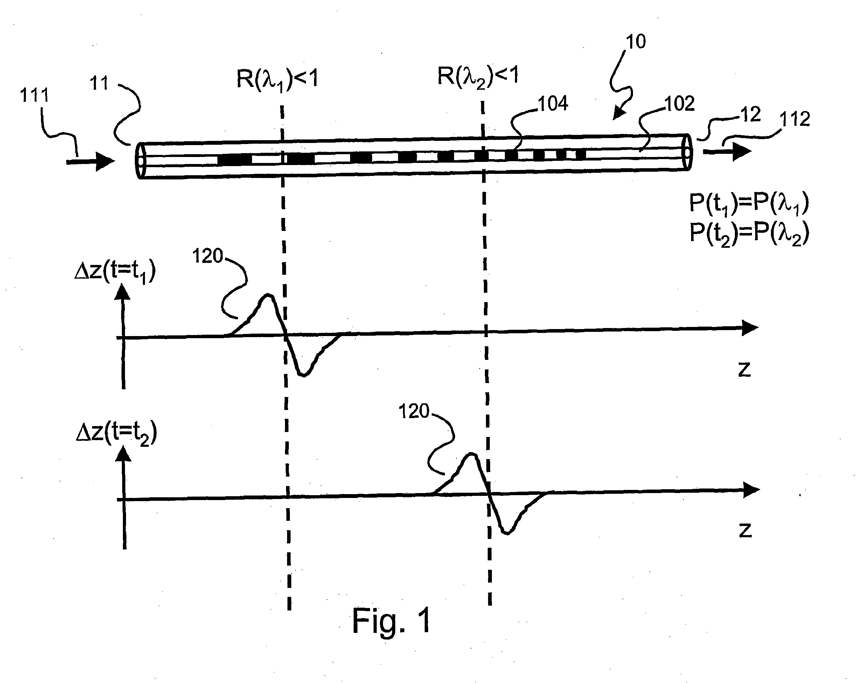

The basic principle behind the present invention will now be described in greater detail with reference to fig. 1.

An optical fibre 10 incorporates, in the core 102 thereof, a chirped Bragg grating 104. The Bragg grating is incorporated into the optical fibre by means of methods known in the art. The fibre 10 has an input end 11 and an output end 12, for receiving input of a light signal and for delivering an output signal, respectively. The chirped Bragg grating exhibit a modulation that is strong enough to reflect essentially all incident light within a predefined wavelength range when the grating is in an unperturbed state. Due to this fact, the chirped Bragg grating is referred to as a chirped Bragg-reflector. In this case, it is assumed that the Bragg-reflector reflects all light wavelengths between $\lambda_0$ and $\lambda_k$. Any wavelength of light within this range will be reflected if sent into the optical fibre incorporating said Bragg-reflector.

In order to establish transmission of light within this wavelength range ($\lambda_0$ to $\lambda_k$) through the chirped Bragg-reflector, a light signal is first directed into the input end 11 of the optical fibre 10, as is indicated by the arrow 111. If the optical fibre, and thus the chirped Bragg-reflector, is in an unperturbed state, the light will be reflected back towards the input end 11, and no light will be transmitted to the output end 12. A longitudinal acoustic pulse 120 is then sent along the optical fibre. In this case, and as is indicated in the figure, the longitudinal acoustic pulse 120 has an anti-symmetric shape, thereby causing in one part a localised and temporary elongation of the optical fibre 10, and in another part a localised and temporary compression of the optical fibre 10. The acoustic pulse 120 alters the reflective properties of the chirped Bragg-reflector 104, and effectively establishes transmission of light through the optical fibre 10.

In fig. 1, the chirped Bragg-reflector is shown to have a grating period that decreases from left to right. This means, as described above, that a longer wavelength is reflected in the left portion of the Bragg-reflector than in the right portion of the Bragg-reflector. When the longitudinal acoustic pulse travels along the grating from left to right, and hence locally and temporarily alters the reflective properties of the reflector, longer wavelengths will be transmitted first, followed by shorter wavelengths.

The mechanism behind the alteration of the reflective properties of the chirped Bragg-reflector will now be described in more detail.

The acoustic pulse that is sent along the optical fibre has one elongating part causing a temporary elongation of the optical fibre, and one compressing part causing a temporary compression of the optical fibre, as mentioned above. In the present example, the acoustic pulse is essentially anti-symmetric, each of said parts being equally important. When the acoustic pulse is sent along the chirped Bragg-reflector (the optical fibre) in a direction in which the grating exhibits a decreasing grating period, it is essential that the acoustic pulse has a leading portion that causes a decrease of the grating period (i.e. a portion that causes a compression of the optical fibre) and a trailing portion that causes an increase of the grating period (i.e a portion that causes an elongation of the optical fibre). The leading portion of the acoustic pulse will then temporarily alter the local grating period, such that the altered local grating period actually gives a reflection for a somewhat shorter wavelength than in its unperturbed state. The trailing portion of the acoustic pulse will at the same time temporarily alter the local grating period, such that the altered local grating period actually gives a reflection for a somewhat longer wavelength than in its unperturbed state. Effectively, a window is created where there is reduced or no reflection, since the grating period of the chirped Bragg-reflector is altered in such a way that there is no grating period giving reflection for a certain wavelength. As the longitudinal acoustic pulse propagates along the chirped Bragg-reflector, the above situation will successively apply for shorter wavelengths, thereby creating a wavelength scan of transmitted light.

If the acoustic pulse propagates along the chirped Bragg-reflector in a direction with increasing grating period, the acoustic pulse should, of course, have the opposite phase in order to cause a similar effect as before.

When the acoustic pulse is given an anti-symmetric shape with a sufficiently short rise time (or fall time) between the compressive and the elongating portion, an etalon effect is obtained, where the reflectivity for a certain wavelength drops essentially to zero.

In the lower part of fig. 1, the acoustic pulse is shown in a co-ordinate system at two different instants. The compression/elongation is illustrated as a change in longitudinal dimension $\Delta z$ at a first point in time $t_1$ and a second point in time $t_2$. At time $t_1$, the acoustic pulse is in a first portion of the Bragg-reflector where the unperturbed grating period is large, hence causing transmission of a long wavelength $\lambda_1$ through the optical fibre. At a later time $t_2$, the acoustic pulse has propagated to a second portion of the Bragg-reflector where the unperturbed grating period is shorter than in the first portion, hence causing transmission of a shorter wavelength $\lambda_2$ through the optical fibre. Consequently, the output power at the output end 12 of the optical fibre at a certain point in time is associated with the power of a corresponding wavelength. In this example, the output power at time $t_1$, which is denoted $P(t_1)$ is associated with the power of the incident light at wavelength $\lambda_1$, which is denoted $P(\lambda_1)$. Thus, $P(t_1) = P(\lambda_1)$, $P(t_2) = P(\lambda_2)$, etc., any losses neglected.

In some cases, a small leakage through the unperturbed Bragg-reflector can be allowed, since such leakage would be straightforward to compensate for.

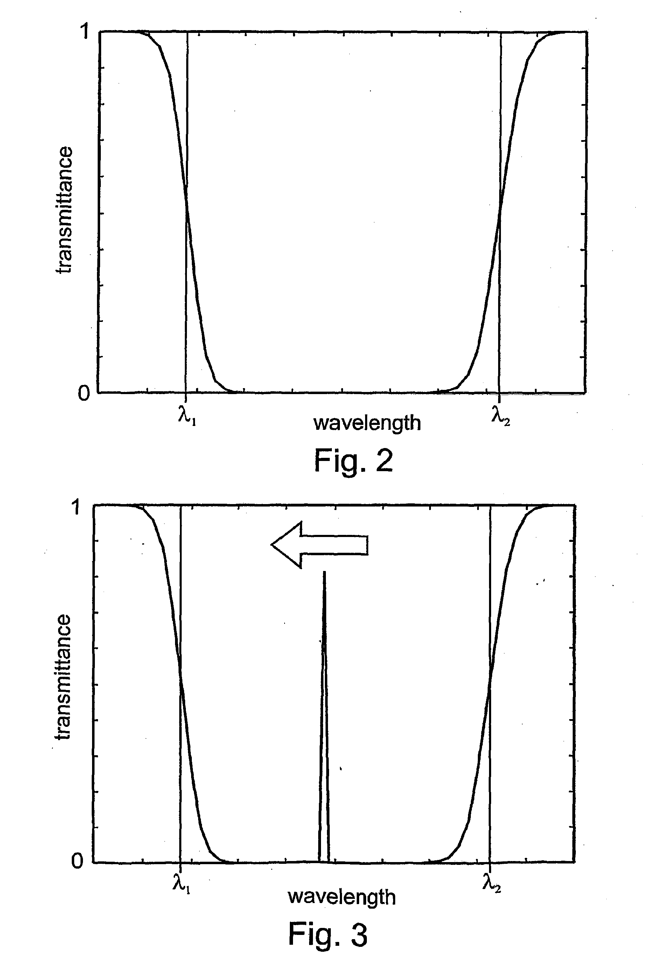

Fig. 2 shows schematically the transmittance of the Bragg-reflector as a function of wavelength. Illustrated in the figure is a reflection band, where there is essentially no transmission. The full width at half maximum (FWHM) of this reflection band is, in the exemplary embodiment, 40 nm. Typically, some 30 nm of the reflection band exhibits no transmission at all in the unperturbed state of the Bragg-reflector, i.e. practically 100 percent reflection. However, it is perceivable to obtain almost any width of the reflection band by choosing the grating period and the chirp accordingly.

Fig. 3 illustrates a narrow transmittance peak that sweeps through the reflection band as the acoustic pulse propagates along the Bragg-reflector. In the figure, the transmittance peak is shown to sweep from longer wavelengths to shorter (from right to left in the figure, as indicated by the arrow), which is the case when the acoustic pulse propagates through the chirped Bragg-reflector in a direction from a longer grating period to a shorter grating period. Of course, if the acoustic pulse was propagating in the opposite direction through the chirped Bragg-reflector, the transmittance peak would sweep in the opposite direction, i.e. from a shorter wavelength to a longer wavelength. When the transmittance peak sweeps through the reflection band of the chirped Bragg-reflector, a wavelength scan of transmitted wavelengths is effectively achieved.

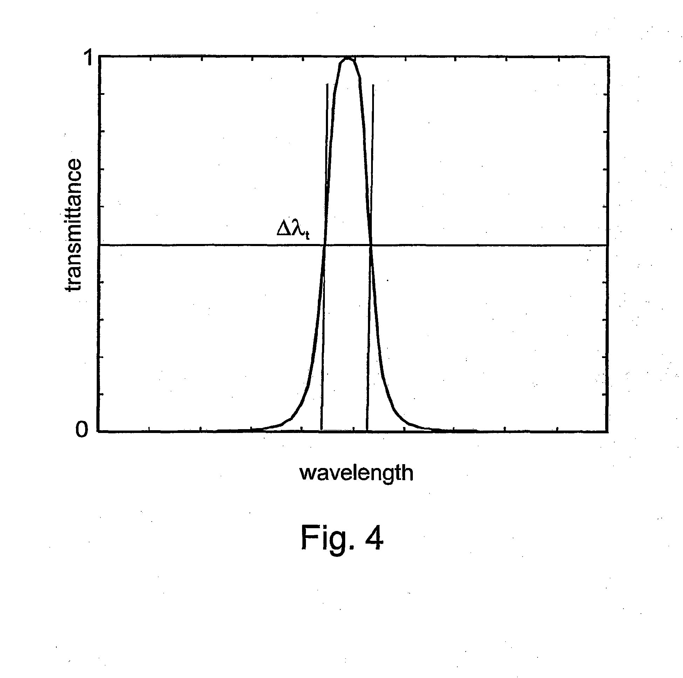

Fig. 4 is a magnified illustration of the transmittance peak. The width of the transmittance peak can be chosen by proper selection of chirp of the Bragg-reflector (i.e. the rate of change of the grating period) and the modulation depth of the grating. The transmittance peak could be as narrow as 40 pm. However, when the present invention is utilised in a spectrum analyser in a WDM system, a transmittance peak of about 0.1 nm (FWHM) is sufficient in order to separate the different channels. As indicated in fig. 4, the transmittance peak can reach 100 percent, by proper choice of system parameters.

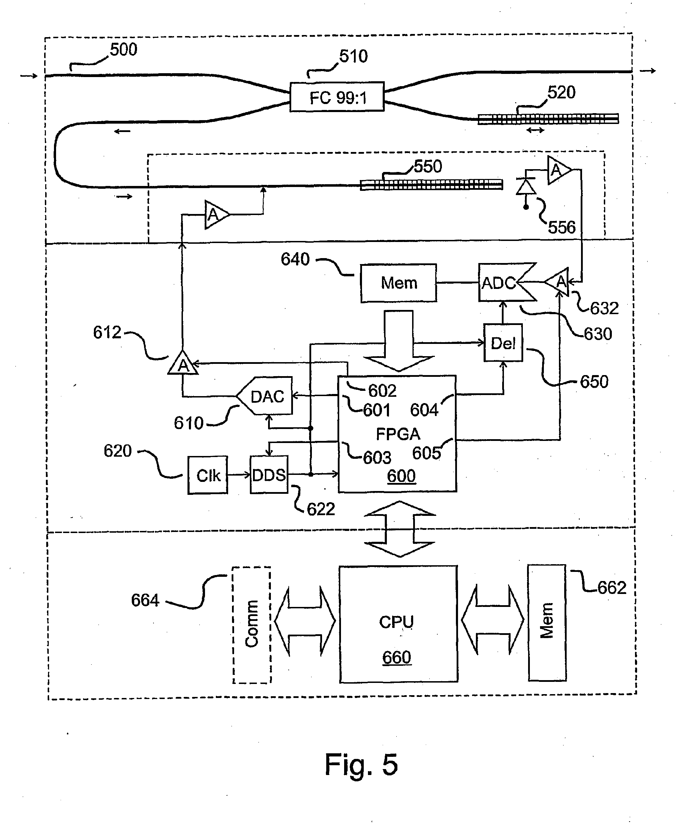

Fig. 5 shows a schematic overview of a preferred embodiment of an arrangement for analysing the power spectrum of a light signal, according to the present invention.

The arrangement is utilised for analysis of the power spectrum of a light signal propagating in an optical transport fibre. A small fraction (typically about 1 percent) of the light propagating in the optical transport fibre is tapped of by a fibre coupler. The light tapped of is subsequently directed into a fibre provided with a chirped Bragg-reflector. Transmission of light through the chirped Bragg-reflector is achieved in accordance with the inventive method described above, by means of sending an acoustic pulse along the fibre. The light thus transmitted is monitored and analysed, in order to provide spectrum analysis of the light signal directed into the fibre.

The preferred arrangement according to the present invention will now be described in greater detail, with reference to fig. 5.

The arrangement is operatively connected to an optical transport fibre 500 through a fibre coupler 510. The coupler 510 is a tap coupler tapping off 1 percent of the power of the light propagating in the optical transport fibre 500. The coupler 510 is non-discriminating in terms of wavelength, which means that each wavelength component propagating in the fibre 500 is tapped off with the same coupling factor. Effectively, the power spectrum of the 1 percent tapped off has the same profile as the power spectrum of the original light signal propagating in the transport fibre 500, but at a lower peak power.

The light tapped off the transport fibre 500 is directed into a secondary fibre 502, and incident upon a broadband Bragg-reflector 520 incorporated into the fibre 502, which Bragg-reflector operates as a broadband filter for the incident light. Only light within the reflectance band of the filtering reflector 520 is reflected back into the secondary fibre 502, the broadband Bragg-reflector 520 thus pre-filtering the light signal to be analysed. Typically, this pre-filtering of the light by means of the filtering reflector 520 selects (i.e. filters out by reflection) the signals in the C- or L-band of the telecommunications bands. The reflected light is subsequently directed into a portion of the secondary fibre incorporating a second Bragg-reflector 550. The second Bragg-reflector 550 is a chirped Bragg-reflector reflecting essentially the same wavelength band as the filtering reflector 520.

The second Bragg-reflector 550 is utilised for establishing transmission of light towards a photodetector 556 provided at the output end of the secondary fibre 502. The transmission of light towards the photodetector 556 is obtained by sending a longitudinal acoustic pulse along the portion of the secondary fibre 502 incorporating the chirped Bragg-reflector 550, according to the present invention. By sending a longitudinal acoustic pulse along the chirped Bragg-grating 550, transmission through the secondary optical fibre 502 is achieved in a very precise fashion. The mechanism behind the transmission is described in detail above.

The arrangement for analysing the power spectrum, according to the present invention, includes an acoustic actuator (not shown in fig. 5) for sending longitudinal acoustic pulses along the chirped Bragg-reflector 550 in the secondary optical fibre 502; a photodetector 556 for detecting the power of the light transmitted through the Bragg-reflector 550; programmable logic 600, in the form of an FPGA (Field Programmable Gate Array), for storing the waveform of the actuating pulses, and for controlling other hardware and perform simple signal analysis; a digital to analogue converter 610 (DAC) for converting digitally encoded output from the FPGA 600 into analogue form; an analogue to digital converter 630 (ADC) for converting monitored analogue signals into digital form for further storing and processing; a memory 640 (Mem) for storing measurement data; a delay line 650 (Del) for sub-sampling data in order to improve measurement resolution; a clock circuit 620 (Clk) for supplying clock pulses to the logic 600; a digital synthesiser circuit 622 (DDS) for tuning the clock frequency and thereby tuning the repetition rate of actuating pulses to the acoustic actuator; and a processing unit 660 (CPU) for processing data and for communicating with the logic 600 and other peripherals.

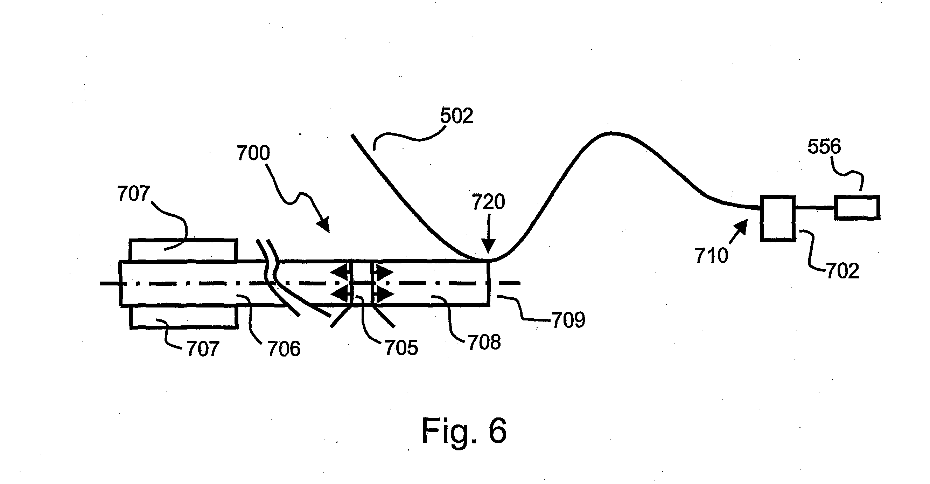

The longitudinal acoustic pulse to be sent along the chirped Bragg-reflector 550 is excited by the acoustic actuator (not shown in fig. 5, but shown in great detail in figs. 6-9) attached to the secondary fibre 502. The supply of actuating pulses to the acoustic actuator is controlled by the programmable logic 600 (FPGA). In the FPGA 600, the waveform of the actuating pulses is stored in digital form. A first output 601 of the FPGA 600 is connected to a first input of a digital to analogue converter 610 (DAC). The DAC is operative to convert the digitally encoded waveform of the actuating pulses to an analogue waveform and to send the analogue output signal to an amplifier 612. The amplified output of the amplifier 612 is fed to the acoustic actuator as actuating pulses. A second output 602 of the FPGA 600 is connected to the amplifier 612 in order to provide control signals from the FPGA 600 to the amplifier 612.

The FPGA 600 is triggered by clock pulses from a clock circuit 620 (Clk). The output of the clock circuit 620 is operatively connected to the FPGA 600 via the digital synthesiser circuit 622 (DDS). The digital synthesiser circuit 622 is operative to tune the frequency of the clock circuit 620 in order to obtain tuning capability of the actuating pulses to the acoustic actuator. In order to control the DDS 622, a third output 603 of the FPGA 600 is connected to the DDS. The clock circuit 620 is also operatively connected, via said DDS, to the DAC 610 and to the delay line 650 and the ADC 630.

The photodetector 556 is operative to detect the power of the output signal from the secondary fibre 502, after transmission through the chirped Bragg-reflector 550. As described above, the output power at each instant corresponds to the power of a certain wavelength component in the light signal directed into the secondary fibre 502. The light directed into the secondary fibre, in turn, having a one to one correspondence to the light propagating in the optical transport fibre 500. The photodetector 556 is arranged to provide a detector output signal, associated with the power of the detected signal, to a preamplifier 632. The output signal from the preamplifier 632 is passed to the ADC 630. The ADC 630 is operative to convert the amplified detector output signal into digitally encoded form and to provide the digitally encoded measurement data to the memory 640 for storing. The delay line 650 and the amplifier 632 (and thus the ADC 630) are controlled by the FPGA 600 through fourth 604 and fifth 605 outputs of the FPGA, respectively.

The contents of the memory 640 is readable to the programmable logic 600. The programmable logic 600 is arranged to read the stored measurement data from the memory 640 and to perform simple signal analysis of the stored data. The analysis performed by the programmable logic 600 is the basis for the control that the logic 600 exerts on the DDS 622, the delay line 650 as well as for the actuating pulses fed to the DAC 610. Furthermore, the programmable logic 600 can communicate with a processing unit 660 (CPU) in order to transfer measurement data for further processing and supervision of system performance.

The processing unit 660 has a memory 662 for storing both processed and non-processed data. Also, the processing unit has connections 664 for communicating with other peripherals (not shown), such as a display device, a keyboard, an I/O-device for communicating with other apparatus, etc.

Furthermore, the output of the filtering reflector 520 can advantageously be connected to a second arrangement according to the present invention. For example, if the C-band of the communications bands is filtered out by a first filtering reflector and analysed in a first arrangement according to the present invention, then a second arrangement can be coupled to the first, for analysing the power spectrum of light signals in the L-band of the communications bands. A person with ordinary skills in the art will find it straightforward to combine two arrangements according to the present invention, in order to analyse two different communications bands simultaneously.

The acoustic actuator and the supply of longitudinal acoustic pulses to the portion of the secondary optical fibre 502 incorporating the chirped Bragg-reflector 550 will now be described in more detail with reference to figs. 6-9.

Fig. 6 shows schematically the acoustic actuator module 700 and the secondary fibre 502 attached thereto.

The acoustic actuator comprises a piezo device 705, made from a piezo-electric material, arranged in a rod 706, 708 capable of guiding acoustic pulses along its longitudinal axis. The rod is made from aluminium, but could also be made from, for example, copper or other suitable material. The piezo device 705 has two connectors attached to its surface for the supply of actuating pulses thereto. The piezo device is responsive to actuating pulses by changing its longitudinal size. Hence, when a voltage is applied to the piezo device 705, the size of the device changes accordingly. If properly actuated, the acoustic actuator emits an acoustic pulse into the rod 706, 708 (as indicated in the figure by the four solid arrows), the rod guiding said pulse towards its ends. One end 706 of the rod is provided with an acoustic attenuator 707, effectively damping the acoustic pulse to essentially zero amplitude. The other end 708 of the rod is firmly attached to the fibre 502, thereby ensuring that the acoustic pulse, emitted by the acoustic actuator, is transferred to the fibre 502. When the acoustic pulse reaches the fibre end 709 of the rod 708, some of the acoustic power is reflected back towards the piezo device 705, and some of the acoustic power is transferred to the fibre 502. The part of the acoustic power that is reflected back into the rod passes through the piezo device 705, and is effectively damped by the acoustic attenuator 707. This ensures that only one pulse is sent into the fibre 502 by each actuation of the piezo device 705.

The acoustic pulse propagates along the fibre 502, and thus along the chirped Bragg-reflector 550, thereby establishing transmission of light through the Bragg-reflector 550, and effectively causing a wavelength scan of wavelengths transmitted towards the detector 556.

At the output end of the secondary fibre 502, the fibre is clamped by a clamping block 702. The clamping block 702 forms a first reflection point 710, and is arranged to give a reflection of the acoustic pulse back towards the rod 708 and the acoustic actuator 705. Furthermore, when the reflected acoustic pulse reaches the attachment of the fibre to the actuator, the pulse is again reflected; this time back towards the output end of the fibre. The attachment of the fibre to the actuator thereby forming a second reflection point 720 for the acoustic pulse.

It is preferred that acoustic pulses are sent into the fibre repeatedly, in order to provide repeated scans of transmitted wavelengths. In this embodiment, an acoustic pulse is sent into the fibre 502 at the time when the reflection in the fibre of a previous pulse reaches the attachment point between the rod and the fibre. The acoustic pulse propagating back and forth between the reflection points 710, 720 thereby achieves some additional amplitude each time the pulse reaches the reflection point at the actuator 720. Preferably, the reflection of the acoustic pulse at each reflection point 710, 720 exhibits some predefined loss. This ensures that the acoustic pulse eventually dies away in a known manner. Another advantage achieved by such a loss is that the timing requirements on the acoustic pulses from the actuator is alleviated to some extent. If an acoustic pulse from the actuator is sent into the fibre 502 slightly off schedule, this unwanted, or untimely, acoustic pulse will eventually die away, thereby preventing the build-up of a systematic error.

As described above, it is essential that the phase of the acoustic pulse corresponds to the chirp of the Bragg-reflector, in order to give the desired result. Conveniently, the reflection of the acoustic pulse at each reflection point 710, 720 introduces a phase change of 180 degrees into the acoustic pulse. The phase of the acoustic pulse will consequently be suitable for establishing the desired transmission through the Bragg-reflector also when the acoustic pulse is propagating back towards the actuator. This dual-pass feature of the present invention can conveniently be utilised for correlation evaluation, in order to increase the resolution and/or detect and correct any possible flaws.

The dual-pass feature is also utilised for the actual interpretation of the detected light signals. In order to ascribe a certain wavelength to a certain instant, i.e. to an output signal from the detector at a certain time, a correlation procedure is utilised. A first pass of the acoustic pulse through the chirped Bragg-reflector causes transmission of a first spectrum profile. A second pass of the acoustic pulse through the chirped Bragg-reflector, now in the opposite direction, causes transmission of a second spectrum profile, which is essentially the same spectrum profile as the first spectrum profile, but in reversed timely order since the acoustic pulse now propagates in the opposite direction through the Bragg-reflector. The acoustic pulse is then reflected back towards the Bragg-reflector a third time, causing transmission of a third spectrum profile. The third spectrum profile is essentially identical to the first spectrum profile if the first and the third pass of the acoustic pulse through the chirped Bragg-reflector are sufficiently close in time (since the light signal to be analysed have not had time to change significantly between the first and the third pass).

Now, a correlation between the first spectrum profile and the third spectrum profile gives at hand a first time interval, corresponding to the passage time of the acoustic pulse to complete one round trip in the fibre between the two reflection points. This first time interval should be constant, unless the length of the fibre is changed by, for example, a temperature change (i.e. thermal expansion or contraction of the fibre).

In order to correlate the second spectrum profile and the first spectrum profile, the second profile must first be mirrored. Mirroring of the second spectrum profile about a reference wavelength, and subsequent correlation between the mirrored spectrum and the first spectrum, gives at hand a second time interval, corresponding to the time elapsed between one transmission of said reference wavelength, and the following transmission of the same reference wavelength during the following passage of the acoustic pulse through the chirped Bragg-reflector.

The relationship between the first time interval and the second time interval is constant, even if the length of the fibre changes due to, for example, temperature changes. This means that there is a unique number (equal to the relationship between the first and the second time intervals) associated with each reference wavelength. By measuring the time intervals, calculating the relationship, and comparing the relationship with a stored value in a look-up table, the corresponding real value for each reference wavelength is obtained.

The analysis of the spectrum profiles is preferably done after sampling the detector output signal into a digitally encoded form, each time interval thus corresponding to a certain number of samples.

Furthermore, by monitoring said first time interval, a change in fibre length due to, for example, temperature changes can be detected. Consequently, the repetition rate of the acoustic pulses can be controlled to comply with the length of the fibre. Hence, resonant feeding of acoustic pulses from the actuator is possible even if the length of the fibre is changed.

By basic symmetry considerations, it is obvious that the length of the piezo device 705 must be carefully selected to suit the desired pulse length of the acoustic pulse to be sent into the fibre 502. A person with ordinary skills in the art will find the suitable length of the piezo device by simple tests and/or computer simulations.

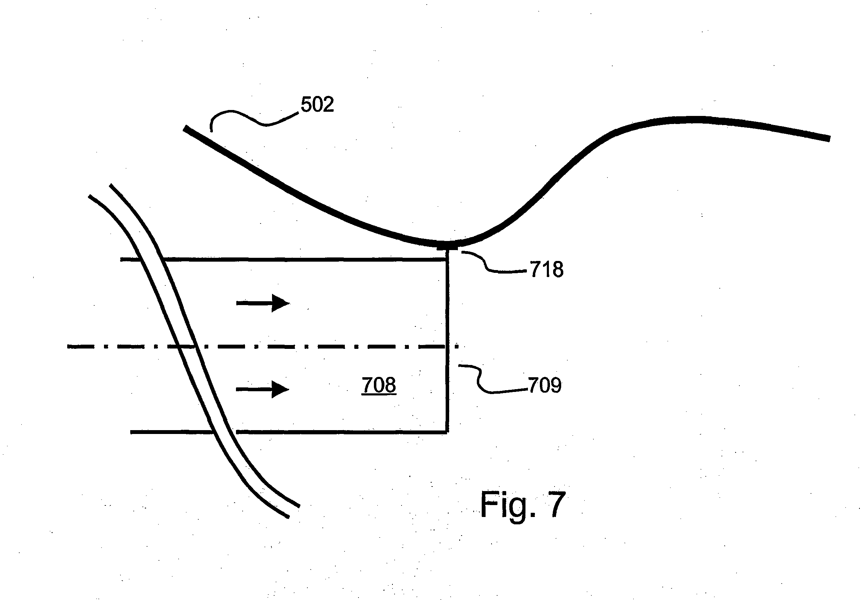

Having described the general features of the acoustic actuator, the attachment of the fibre 502 thereto will now be described in more detail with reference to figs. 7-9.

Fig. 7 shows schematically the end 708 of the actuator rod to which the fibre 502 is attached. As illustrated in the figure, the end of the rod is provided with a shoulder 718, which the fibre 502 is to bear against.

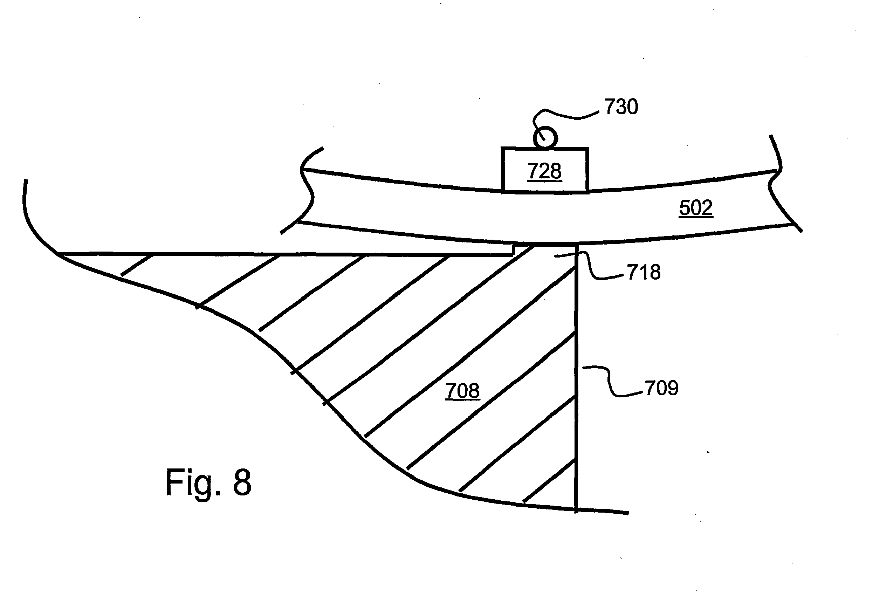

In fig. 8, the end of the rod is shown in greater detail. The fibre 502 bears against the shoulder 718 and is fixed thereto by means of a contact block 728. The contact block 728 is tightened to the fibre 502 by means of a wire 730, in this case a tungsten wire, surrounding the entire rod 708. The purpose of the contact block 728 is to distribute the force from the wire 730, and to give a well defined interaction length L between the fibre 502 and the actuator rod.

The placement and the length of the shoulder 718 requires some consideration. The placement of the shoulder 718 need to be close to the end of the actuator rod, which in practise means that the centre of the shoulder should be within a fraction of the shortest wavelength (the highest frequency) building up the acoustic pulse. With such an arrangement of the shoulder, the distortion of the acoustic pulse when transferred from the rod to the fibre is minimised. The placement of the shoulder 718 can also be utilised to obtain a desired distortion, e.g. a low pass filtering, of the acoustic pulse when it enters the optical fibre 502.

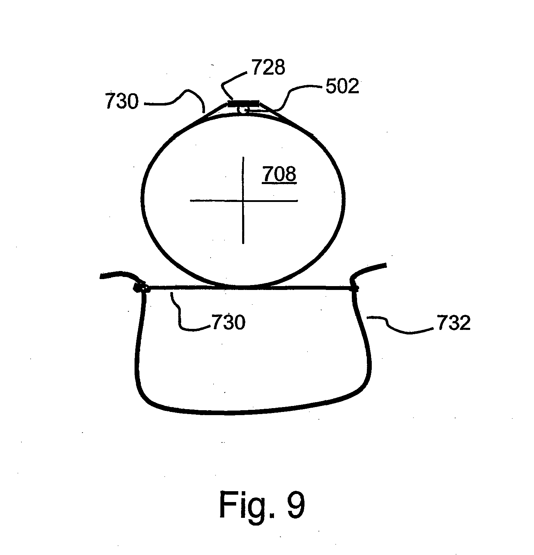

Fig. 9 is a cross-sectional view of the attachment of the fibre 502 to the actuator rod 708. The fibre 502 is clamped to the rod 708 by means of the contact block 728, and fixed into place by the wire 730. The wire 730 is wound one full turn around the rod 708, and is tightened by a spring 732, as shown. This arrangement ensures a firm attachment of the fibre 502 to the actuator rod 708 in a well defined way.

Thus, the proximity of the attachment point (i.e. the shoulder 718) to the end of the actuator rod 708, allows of reliable transfer of acoustic pulses into the fibre 502. More particularly, the closeness of the shoulder 718 to the end of the rod eliminates any influence from possible interference between a portion of the acoustic pulse propagating in one direction and a portion of the acoustic pulse propagating, after reflection, in the opposite direction.

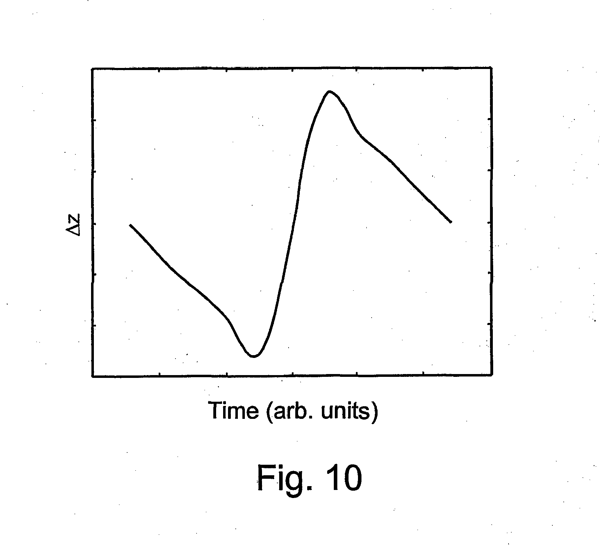

Fig. 10 shows an example of a longitudinal acoustic pulse, illustrating its shape as it propagates in the actuator rod 708 and in the optical fibre 502, according to the present invention. In the shown example, the pulse is anti-symmetric and plotted in terms of change in length Δz. The shape shown is preferred, since such a shape gives a transmittance peak of close to 100 percent transmission of a certain wavelength.

Although the present invention has been described with reference to the drawings and by way of preferred embodiments, it is to be understood that the embodiments described can undergo several alterations and modifications without departing from the scope of the invention as claimed in the accompanying claims.

## Claims

1. A method of establishing transmission of light through a light guiding structure (10) incorporating a chirped Bragg-reflector (104), comprising the steps of
   directing light into an input end (11) of said light guiding structure (10), and **characterised by**
   sending a longitudinal acoustic pulse (120) into said light guiding structure (10) for propagation along the same, the acoustic pulse (120) being such that, for each location of said acoustic pulse (120) said Bragg-reflector (104), the reflectivity for a wavelength associated with said location in said Bragg-reflector is altered.

2. The method as set forth in claim 1, wherein the propagation of the acoustic pulse along said light guiding structure causes an alteration of a local grating period of said chirped Bragg-reflector to provide, for each location of said acoustic pulse in said Bragg-reflector, transmission of a wavelength associated with said location, thereby providing a wavelength scan of transmitted wavelengths as the acoustic pulse propagates along said Bragg-reflector.

3. The method as set forth in claim 1, wherein the acoustic pulse has a first part and a second part, said first part causing a temporary increase of the local grating period of the chirped Bragg-reflector, and said second part causing a temporary decrease of the local grating period of said Bragg-reflector.

4. The method as set forth in claim 3, wherein the portion of said chirped Bragg-reflector containing the first part of said acoustic pulse has, in its unperturbed state, a longer grating period than the portion of said Bragg-reflector containing the second part of said acoustic pulse.

5. The method as set forth in claim 1, wherein the step of sending a longitudinal acoustic pulse through the light guiding structure is performed repeatedly, whereby a plurality of acoustic pulses is sent through said light guiding structure, of which plurality of acoustic pulses only one acoustic pulse is present in the chirped Bragg-reflector at any one instant.

6. The method as set forth in claim 1, further comprising the step of
detecting, at an output end (12) of the light guiding structure, the intensity of the light transmitted, the light detected at a certain instant in time corresponding to a certain wavelength, thereby allowing analysis of the power spectrum of the light directed into said light guiding structure.

7. The method as set forth in claim 6, further including the step of
pre-filtering the light to be directed into the light guiding structure by means of a broadband filter, said filter passing essentially the same wavelength range as the chirped Bragg-reflector reflects.

8. The method as set forth in claim 3, wherein either one of the first and the second part of the acoustic pulse is predominant, the acoustic pulse thereby causing mainly an increase or mainly a decrease of the local grating period of the Bragg-reflector.

9. The method as set forth in claim 1, wherein said light guiding structure is the core of an optical fibre.

10. An arrangement for analysing the power spectrum of a light signal, comprising
a light guiding structure, having an input end and an output end;
a chirped Bragg-reflector (550,104) in said light guiding structure, which chirped Bragg-reflector is provided between the input end and the output end;
an acoustic actuator (700) connected to said light guiding structure; and
a detector (556) provided at the output end of said light guiding structure, said detector delivering a detector output signal, **characterised in that**
the input end of said light guiding structure is arranged to receive the light signal to be analysed, said acoustic actuator (700) is operative to emit a longitudinal acoustic pulse for propagation along the light guiding structure, and said detector (556) is operative to detect the light thus transmitted through said Bragg-reflector (550) and to provide a detector output signal associated with the power spectrum of said light signal.

11. The arrangement as set forth in claim 10, further including a broadband filter (520) provided in the light path prior to the input end of the light guiding structure, said filter being arranged to pass only light of a desired wavelength range to said light guiding structure.

12. The arrangement as set forth in claim 11, wherein the broadband filter is arranged to pass essentially the same wavelength range as the chirped Bragg-reflector reflects.

13. The arrangement as set forth in any one of the claims 10 - 12, further comprising a logic unit (600) connected to said acoustic actuator, for supplying actuating pulses to said acoustic actuator.

14. The arrangement as set forth in claim 13, further comprising a processing unit (660), which is arranged to control the operation of the logic unit (600).

15. The arrangement as set forth in claim 13, wherein the logic unit is arranged to perform basic signal analysis of the detector output signal.

16. The arrangement as set forth in claim 15, wherein the basic signal analysis performed by the logic unit is utilised for the control of the acoustic actuator.

17. The arrangement as set forth in claim 10, wherein the light guiding structure is clamped at a first point (710) and a second point (720) thereof, thereby defining a first and a second reflection point, at which reflection points the acoustic pulse is reflected, and effectively providing multiple passages of the acoustic pulse through the Bragg-reflector.

18. The arrangement as set forth in claim 17, wherein the acoustic actuator is connected to the light guiding structure at either one of the first and the second reflection points.

19. The arrangement as set forth in claim 18, wherein the acoustic actuator is arranged to emit a longitudinal acoustic pulse into the light guiding structure at the time when a previous acoustic pulse, after its reflection, arrives at the point where said actuator is connected to the light guiding structure.

20. The method of claim 1 for analysing the power spectrum of a light signal, wherein the light signal to be analysed is directed into the light guiding structure incorporating the chirped Bragg-reflector, and further comprising the steps of
monitoring the light thus transmitted through said light guiding structure, and
analysing the monitored light, in order to obtain a power spectrum analysis of the light signal directed into the light guiding structure.

21. The method as set forth in claim 20, wherein the propagation of the acoustic pulse along said light guiding structure causes an alteration of the local grating period of said chirped Bragg-reflector to provide, for each location of said acoustic pulse in said Bragg-reflector, transmission of a wavelength associated with said location, thereby providing a wavelength scan of transmitted wavelengths as the acoustic pulse propagates along said Bragg-reflector.

22. The method as set forth in claim 20, wherein the acoustic pulse has a first part and a second part, said first part causing a temporary increase of the local grating period of the Bragg-reflector, and said second part causing a temporary decrease of the local grating period of said Bragg-reflector.

23. The method as set forth in claim 22, wherein the portion of said chirped Bragg-reflector containing the first part of said acoustic pulse has, in its unperturbed state, a longer grating period than the portion of said Bragg-reflector containing the second part of said acoustic pulse.

24. The method as set forth in claim 20, wherein the step of monitoring the light transmitted through the light guiding structure includes detecting said transmitted light by means of a detector, the detector providing a detector output signal associated with the power of the transmitted light signal.

25. The method as set forth in claim 20, wherein said light guiding structure is the core of an optical fibre.

26. The method as set forth in claim 24, wherein the step of sending a longitudinal acoustic pulse along the light guiding structure is performed repeatedly, whereby a plurality of acoustic pulses is sent along said light guiding structure, of which plurality of acoustic pulses only one acoustic pulse is present in the chirped Bragg-reflector at any one instant.

27. The method as set forth in claim 26, wherein each acoustic pulse is reflected back and forth between two reflection points in the light guiding structure, each successive pulse of said plurality of acoustic pulses being sent into the light guiding structure at the time when the previous acoustic pulse, after its reflection, reaches the acoustic actuator.

28. The method as set forth in claim 27, wherein the wavelength scan obtained by a passage of an acoustic pulse through the chirped Bragg-reflector is utilised together with a subsequent wavelength scan for spectrum analysis of the light signal directed into the light guiding structure.

29. The method as set forth in claim 28, wherein correlation between different wavelength scans in the detector output signal is performed in order to interpret said detector output signals, to ascribe the detector output at a certain instant to a specific wavelength.

30. The method as set forth in claim 20, further including the step of
pre-filtering the light to be directed into the light guiding structure by means of a broadband filter, said filter passing essentially the same wavelength range as the chirped Bragg-reflector reflects.

31. The method as set forth in claim 24, wherein the detector output signal is fed to a logic unit, said logic unit processing said detector output signal to provide a logic unit output signal indicative of the power spectrum of the light signal directed into the light guiding structure.

**Patentansprüche**

1. Verfahren zur Herstellung einer Übertragung von Licht durch eine Lichtleiterstruktur (10), die einen gechirpten Bragg-Reflektor (104) enthält, die Schritte umfassend,
Licht in ein Eingangsende (11) der Lichtleiterstruktur (10) zu richten, und **gekennzeichnet durch**
Aussenden eines akustischen Longitudinalimpulses (120) in die Lichtleiterstruktur (10) zur Fortpflanzung entlang derselben, wobei der akustische Impuls (120) dergestalt ist, dass für jede Position des akustischen Impulses (120) im Bragg-Reflektor (104) das Reflexionsvermögen für eine der Position im Bragg-Reflektor zugeordnete Wellenlänge anders ist.

**2.** Verfahren nach Anspruch 1, wobei die Fortpflanzung des akustischen Impulses entlang der Lichtleiterstruktur eine Veränderung einer lokalen Gitterperiode des gechirpten Bragg-Reflektors verursacht, um für jede Position des akustischen Impulses im Bragg-Reflektor eine Übertragung einer dieser Position zugeordneten Wellenlänge bereitzustellen, wodurch eine Wellenlängenabtastung von übertragenen Wellenlängen bereitgestellt wird, wenn sich der akustische Impuls entlang des Bragg-Reflektors fortpflanzt.

**3.** Verfahren nach Anspruch 1, wobei der akustische Impuls einen ersten Teil und einen zweiten Teil umfasst, wobei der erste Teil eine vorübergehende Vergrößerung der lokalen Gitterperiode des gechirpten Bragg-Reflektors verursacht und der zweite Teil eine vorübergehende Verkleinerung der lokalen Gitterperiode des Bragg-Reflektors verursacht.

**4.** Verfahren nach Anspruch 3, wobei der Abschnitt des gechirpten Bragg-Reflektors, der den ersten Teil des akustischen Impulses enthält, in seinem ungestörten Zustand eine längere Gitterperiode hat als der Abschnitt des Bragg-Reflektors, der den zweiten Teil des akustischen Impulses enthält.

**5.** Verfahren nach Anspruch 1, wobei der Schritt des Aussendens eines akustischen Longitudinalimpulses durch die Lichtleiterstruktur wiederholt ausgeführt wird, wodurch eine Vielzahl von akustischen Impulsen durch die Lichtleiterstruktur gesendet wird, wobei von dieser Vielzahl akustischer Impulse zu jedem Zeitpunkt nur ein akustischer Impuls im gechirpten Bragg-Reflektor vorhanden ist.

**6.** Verfahren nach Anspruch 1, darüber hinaus den Schritt umfassend,
an einem Ausgangsende (12) der Lichtleiterstruktur die Intensität des übertragenen Lichts zu erfassen, wobei das zu einem bestimmten Zeitpunkt erfasste Licht einer bestimmten Wellenlänge entspricht, wodurch eine Analyse des Leistungsspektrums des in die Lichtleiterstruktur gerichteten Lichts ermöglicht wird.

**7.** Verfahren nach Anspruch 6, darüber hinaus den Schritt umfassend, das in die Lichtleiterstruktur zu richtende Licht mittels eines Breitbandfilters einer Vorfilterung zu unterziehen, wobei der Filter im Wesentlichen denselben Wellenlängenbereich durchlässt wie der gechirpte Bragg-Reflektor reflektiert.

**8.** Verfahren nach Anspruch 3, wobei entweder der erste oder der zweite Teil des akustischen Impulses vorherrschend ist, wodurch der akustische Impuls vorwiegend eine Vergrößerung oder vorwiegend eine Verkleinerung der lokalen Gitterperiode des Bragg-Reflektors verursacht.

**9.** Verfahren nach Anspruch 1, wobei es sich bei der Lichtleiterstruktur um den Kern einer optischen Faser handelt.

**10.** Anordnung zum Analysieren des Leistungsspektrums eines Lichtsignals, umfassend
eine Lichtleiterstruktur mit einem Eingangsende und einem Ausgangsende;
einen gechirpten Bragg-Reflektor (550, 104) in der Lichtleiterstruktur, wobei der gechirpte Bragg-Reflektor zwischen dem Eingangsende und dem Ausgangsende vorgesehen ist;
einen akustischen Aktor (700), der an die Lichtleiterstruktur angeschlossen ist; und einen Detektor (556), der am Ausgangsende der Lichtleiterstruktur vorgesehen ist, wobei der Detektor ein Detektorausgangssignal liefert, **dadurch gekennzeichnet, dass**
das Eingangsende der Lichtleiterstruktur dazu eingerichtet ist, das zu analysierende Lichtsignal zu empfangen, wobei der akustische Aktor (700) dahingehend funktionsfähig ist, einen akustischen Longitudinalimpuls zur Fortpflanzung entlang der Lichtleiterstruktur auszusenden, und der Detektor (556) dahingehend funktionsfähig ist, das so durch den Bragg-Reflektor (550) übertragene Licht zu erfassen und ein Detektorausgangssignal bereitzustellen, das dem Leistungsspektrum des Lichtsignals zugeordnet ist.

**11.** Anordnung nach Anspruch 10, darüber hinaus mit einem Breitbandfilter (520), der im Lichtweg vor dem Eingangsende der Lichtleiterstruktur vorgesehen ist, wobei der Filter dazu eingerichtet ist, nur Licht eines gewünschten Wellenlängenbereichs zur Lichtleiterstruktur durchzulassen.

**12.** Anordnung nach Anspruch 11, wobei der Breitbandfilter dazu eingerichtet ist, im Wesentlichen denselben Wellenlängenbereich durchzulassen wie der gechirpte Bragg-Reflektor reflektiert.

**13.** Anordnung nach einem der Ansprüche 10 bis 12, darüber hinaus eine Logikeinheit (600) aufweisend, die an den akustischen Aktor angeschlossen ist, um dem akustischen Aktor Auslöseimpulse zuzuführen.

**14.** Anordnung nach Anspruch 13, darüber hinaus mit einer Verarbeitungseinheit (660), die dazu eingerichtet ist, den Betrieb der Logikeinheit (600) zu steuern.

**15.** Anordnung nach Anspruch 13, wobei die Logikeinheit dazu eingerichtet ist, eine grundlegende Signalanalyse des Detektorausgangssignals durchzuführen.

**16.** Anordnung nach Anspruch 15, wobei die von der Logikeinheit durchgeführte grundlegende Signalanalyse zur Steuerung des akustischen Aktors verwendet wird.

**17.** Anordnung nach Anspruch 10, wobei die Lichtleiterstruktur an einem ersten Punkt (710) und einem zweiten Punkt (720) von ihr eingespannt ist, wodurch ein erster und ein zweiter Reflexionspunkt definiert wird, an welchen Reflexionspunkten der akustische Impuls reflektiert wird, und im Endeffekt mehrere Durchgänge des akustischen Impulses durch den Bragg-Reflektor bereitgestellt werden.

**18.** Anordnung nach Anspruch 17, wobei der akustische Aktor am ersten oder zweiten Reflexionspunkt an die Lichtleiterstruktur angeschlossen ist.

**19.** Anordnung nach Anspruch 18, wobei der akustische Aktor dazu eingerichtet ist, einen akustischen Longitudinalimpuls in die Lichtleiterstruktur zu einem Zeitpunkt auszusenden, an dem ein vorheriger akustischer Impuls nach seiner Reflexion an dem Punkt ankommt, an dem der Aktor an die Lichtleiterstruktur angeschlossen ist.

**20.** Verfahren nach Anspruch 1 zum Analysieren des Leistungsspektrums eines Lichtsignals, wobei das zu analysierende Lichtsignal in die Lichtleiterstruktur gerichtet wird, die den gechirpten Bragg-Reflektor enthält, und darüber hinaus die Schritte umfassend, das so durch die Lichtleiterstruktur übertragene Licht zu überwachen, und das überwachte Licht zu analysieren, um eine Analyse des Leistungsspektrums des in die Lichtleiterstruktur gerichteten Lichtsignals zu erhalten.

**21.** Verfahren nach Anspruch 20, wobei die Fortpflanzung des akustischen Impulses entlang der Lichtleiterstruktur eine Veränderung der lokalen Gitterperiode des gechirpten Bragg-Reflektors verursacht, um für jede Position des akustischen Impulses im Bragg-Reflektor eine Übertragung einer dieser Position zugeordneten Wellenlänge bereitzustellen, wodurch eine Wellenlängenabtastung von übertragenen Wellenlängen bereitgestellt wird, wenn sich der akustische Impuls entlang des Bragg-Reflektors fortpflanzt.

**22.** Verfahren nach Anspruch 20, wobei der akustische Impuls einen ersten Teil und einen zweiten Teil umfasst, wobei der erste Teil eine vorübergehende Vergrößerung der lokalen Gitterperiode des gechirpten Bragg-Reflektors verursacht und der zweite Teil eine vorübergehende Verkleinerung der lokalen Gitterperiode des Bragg-Reflektors verursacht.

**23.** Verfahren nach Anspruch 22, wobei der Abschnitt des gechirpten Bragg-Reflektors, der den ersten Teil des akustischen Impulses enthält, in seinem ungestörten Zustand eine längere Gitterperiode hat als der Abschnitt des Bragg-Reflektors, der den zweiten Teil des akustischen Impulses enthält.

**24.** Verfahren nach Anspruch 20, wobei der Schritt des Überwachens des durch die Lichtleiterstruktur übertragenen Lichts umfasst, das übertragene Licht mittels eines Detektors zu erfassen, wobei der Detektor ein Detektorausgangssignal liefert, das der Leistung des übertragenen Lichtsignals zugeordnet ist.

**25.** Verfahren nach Anspruch 20, wobei es sich bei der Lichtleiterstruktur um den Kern einer optischen Faser handelt.

**26.** Verfahren nach Anspruch 24, wobei der Schritt des Aussendens eines akustischen Longitudinalimpulses entlang der Lichtleiterstruktur wiederholt ausgeführt wird, wodurch eine Vielzahl von akustischen Impulsen entlang der Lichtleiterstruktur gesendet wird, wobei von dieser Vielzahl akustischer Impulse zu jedem Zeitpunkt nur ein akustischer Impuls im gechirpten Bragg-Reflektor vorhanden ist.

**27.** Verfahren nach Anspruch 26, wobei jeder akustische Impuls zwischen zwei Reflexionspunkten in der Lichtleiterstruktur hin und her reflektiert wird, wobei jeder nachfolgende Impuls aus der Vielzahl akustischer Impulse zu dem Zeitpunkt in die Lichtleiterstruktur gesendet wird, an dem der vorherige akustische Impuls nach seiner Reflexion den akustischen Aktor erreicht.

**28.** Verfahren nach Anspruch 27, wobei die durch einen Durchlauf eines akustischen Impulses durch den gechirpten Bragg-Reflektors erhaltene Wellenlängenabtastung zusammen mit einer darauffolgenden Wellenlängenabtastung zur Spektralanalyse des in die Lichtleiterstruktur gerichteten Lichtsignals verwendet wird.

**29.** Verfahren nach Anspruch 28, wobei eine Korrelation zwischen verschiedenen Wellenlängenabtastungen im Detektorausgangssignal durchgeführt wird, um die Detektorausgangssignale zu interpretieren, um dem Detektorausgang an einem bestimmten Zeitpunkt eine spezifische Wellenlänge zuzuweisen.

**30.** Verfahren nach Anspruch 20, darüber hinaus den Schritt aufweisend, das in die Lichtleiterstruktur zu richtende Licht mittels eines Breitbandfilters einer Vorfilterung zu unterziehen, wobei der Filter im Wesentlichen denselben Wellenlängenbereich durchlässt wie der gechirpte Bragg-Reflektor reflektiert.

**31.** Verfahren nach Anspruch 24, wobei das Detektorausgangssignal in eine Logikeinheit eingegeben wird, wobei die Logikeinheit das Detektorausgangssignal verarbeitet, um ein Logikeinheit-Ausgangssignal bereitzustellen, das für das Leistungsspektrum des in die Lichtleiterstruktur gerichteten Lichtsignals bezeichnend ist.

**Revendications**

**1.** Un procédé d'établissement d'une transmission de lumière au travers d'une structure de guidage de lumière (10) incorporant un réflecteur de Bragg modulé (chirped) (104), comprenant les étapes suivantes :

la direction de la lumière vers une extrémité d'entrée (11) de ladite structure de guidage de lumière (10), et **caractérisé par** l'envoi d'une impulsion acoustique longitudinale (120) vers ladite structure de guidage de lumière (10) pour une propagation le long de celle-ci, l'impulsion acoustique (120) étant telle que, pour chaque emplacement de ladite impulsion acoustique (120) dans ledit réflecteur de Bragg (104), la réflectivité pour une longueur d'onde associée audit emplacement dans ledit réflecteur de Bragg est modifiée.

**2.** Le procédé selon la revendication 1, dans lequel la propagation de l'impulsion acoustique le long de ladite structure de guidage de lumière provoque une altération d'une période de réseau local dudit réflecteur de Bragg comprimé de façon à fournir, pour chaque emplacement de ladite impulsion acoustique dans ledit réflecteur de Bragg, une transmission d'une longueur d'onde associée audit emplacement, fournissant ainsi un balayage d'une longueur d'onde de longueurs d'onde transmises à mesure que l'impulsion acoustique se propage le long dudit réflecteur de Bragg.

**3.** Le procédé selon la revendication 1, dans lequel l'impulsion acoustique possède une première partie et une deuxième partie, ladite première partie provoquant une augmentation temporaire de la période de réseau local du réflecteur de Bragg comprimé et ladite deuxième partie provoquant une diminution temporaire de la période de réseau local dudit réflecteur de Bragg.

**4.** Le procédé selon la revendication 3, dans lequel la partie dudit réflecteur de Bragg comprimé contenant la première partie de ladite impulsion acoustique possède, dans son état non perturbé, une période de réseau plus longue que la partie dudit réflecteur de Bragg contenant la deuxième partie de ladite impulsion acoustique.

**5.** Le procédé selon la revendication 1, dans lequel l'étape d'envoi d'une impulsion acoustique longitudinale au travers de la structure de guidage de lumière est exécutée de manière répétée, grâce à quoi une pluralité d'impulsions acoustiques est envoyée au travers de ladite structure de guidage de lumière, de ladite pluralité d'impulsions acoustiques uniquement une impulsion acoustique étant présente dans le réflecteur de Bragg comprimé à un instant quelconque.

**6.** Le procédé selon la revendication 1, comprenant en outre l'étape de détection, au niveau d'une extrémité de sortie (12) de la structure de guidage de lumière, de l'intensité de la lumière transmise, la lumière détectée à un instant donné correspondant à une longueur d'onde donnée, permettant ainsi une analyse du spectre de puissance de la lumière dirigée dans ladite structure de guidage de lumière.

**7.** Le procédé selon la revendication 6, comprenant en outre l'étape de préfiltrage de la lumière à diriger dans la structure de guidage de lumière au moyen d'un filtre à large bande, ledit filtre faisant passer essentiellement la même gamme de longueurs d'onde que celle que le réflecteur de Bragg comprimé réfléchit.

**8.** Le procédé selon la revendication 3, dans lequel une partie parmi la première et la deuxième partie de l'impulsion acoustique est prédominante, l'impulsion acoustique provoquant ainsi principalement une augmentation ou principalement une diminution de la période de réseau local du réflecteur de Bragg.

**9.** Le procédé selon la revendication 1, dans lequel ladite structure de guidage de lumière est le noyau d'une fibre optique.

**10.** Un agencement destiné à une analyse du spectre de puissance d'un signal lumineux, comprenant une structure de guidage de lumière possédant une extrémité d'entrée et une extrémité de sortie, un réflecteur de Bragg comprimé (550, 104) dans ladite structure de guidage de lumière, ledit réflecteur de Bragg comprimé étant installé entre l'extrémité d'entrée et l'extrémité de sortie, un actionneur acoustique (700) raccordé à ladite structure de guidage de lumière, et un détecteur (556) installé à l'extrémité de sortie de ladite structure de guidage de lumière, ledit détecteur fournissant un signal de sortie de détecteur, **caractérisé en ce que** l'extrémité d'entrée de ladite structure de guidage de lumière est agencée de façon à recevoir le signal lumineux à analyser, ledit actionneur acoustique (700) étant conçu de façon à émettre une impulsion acoustique longitudinale pour une propagation le long de la structure de guidage de lumière, et ledit détecteur (556) étant conçu de façon à détecter la lumière ainsi transmise au travers dudit réflecteur de Bragg (550) et à fournir un signal de sortie de détecteur associé au spectre de puissance dudit signal lumineux.

11. L'agencement selon la revendication 10, comprenant en outre un filtre à large bande (520) installé dans le trajet lumineux avant l'extrémité d'entrée de la structure de guidage de lumière, ledit filtre étant agencé de façon à faire passer uniquement une lumière d'une gamme de longueurs d'onde souhaitée vers ladite structure de guidage de lumière.

12. L'agencement selon la revendication 11, dans lequel le filtre à large bande est agencé de façon à faire passer essentiellement la même gamme de longueurs d'onde que celle que le réflecteur de Bragg comprimé réfléchit.

13. L'agencement selon l'une quelconque des revendications 10 à 12, comprenant en outre une unité logique (600) raccordée audit actionneur acoustique destinée à la fourniture d'impulsions d'actionnement audit actionneur acoustique.

14. L'agencement selon la revendication 13, comprenant en outre une unité de traitement (660), ladite unité étant agencée de façon à commander le fonctionnement de l'unité logique (600).

15. L'agencement selon la revendication 13, dans lequel l'unité logique est agencée de façon à exécuter une analyse de signal de base du signal de sortie de détecteur.

16. L'agencement selon la revendication 15, dans lequel l'analyse de signal de base exécutée par l'unité logique est utilisée pour la commande de l'actionneur acoustique.

17. L'agencement selon la revendication 10, dans lequel la structure de guidage de lumière est fixée à un premier point (710) et à un deuxième point (720) de celle-ci, définissant ainsi un premier et un deuxième points de réflexion, l'impulsion acoustique étant réfléchie auxdits points de réflexion, et fournissant de manière efficace une pluralité de passages de l'impulsion acoustique au travers du réflecteur de Bragg.

18. L'agencement selon la revendication 17, dans lequel l'actionneur acoustique est raccordé à la structure de guidage de lumière au niveau d'un point parmi le premier et le deuxième points de réflexion.

19. L'agencement selon la revendication 18, dans lequel l'actionneur acoustique est agencé de façon à émettre une impulsion acoustique longitudinale vers la structure de guidage de lumière à l'instant où une impulsion acoustique antérieure, après sa réflexion, arrive au niveau du point où ledit actionneur est raccordé à la structure de guidage de lumière.

20. Le procédé selon la revendication 1 destiné à l'analyse du spectre de puissance d'un signal lumineux, dans lequel
le signal lumineux à analyser est dirigé vers la structure de guidage de lumière incorporant le réflecteur de Bragg comprimé, et comprenant en outre les étapes suivantes :

la surveillance de la lumière ainsi transmise au travers de ladite structure de guidage de lumière, et
l'analyse de la lumière surveillée de façon à obtenir une analyse de spectre de puissance du signal lumineux dirigé vers la structure de guidage de lumière.

21. Le procédé selon la revendication 20, dans lequel la propagation de l'impulsion acoustique le long de ladite structure de guidage de lumière provoque une altération de la période de réseau local dudit réflecteur de Bragg comprimé de façon à fournir, pour chaque emplacement de ladite impulsion acoustique dans ledit réflecteur de Bragg, une transmission d'une longueur d'onde associée audit emplacement, fournissant ainsi un balayage d'une longueur d'onde de longueurs d'onde transmises à mesure que l'impulsion acoustique se propage le long dudit réflecteur de Bragg.

22. Le procédé selon la revendication 20, dans lequel l'impulsion acoustique possède une première partie et une deuxième partie, ladite première partie provoquant une augmentation temporaire de la période de réseau local du réflecteur de Bragg et ladite deuxième partie provoquant une diminution temporaire de la période de réseau local dudit réflecteur de Bragg.

23. Le procédé selon la revendication 22, dans lequel la partie dudit réflecteur de Bragg comprimé contenant la première partie de ladite impulsion acoustique possède, dans son état non perturbé, une période de réseau plus longue que la partie dudit réflecteur de Bragg contenant la deuxième partie de ladite impulsion acoustique.

24. Le procédé selon la revendication 20, dans lequel l'étape de surveillance de la lumière transmise au travers de la structure de guidage de lumière comprend la détection de ladite lumière transmise au moyen d'un détecteur, le détecteur fournissant un signal de sortie de détecteur associé à la puissance du signal lumineux transmis.

**25.** Le procédé selon la revendication 20, dans lequel ladite structure de guidage de lumière est le noyau d'une fibre optique.

**26.** Le procédé selon la revendication 24, dans lequel l'étape d'envoi d'une impulsion acoustique longitudinale le long de la structure de guidage de lumière est exécutée de manière répétée, grâce à quoi une pluralité d'impulsions acoustiques est envoyée le long de ladite structure de guidage de lumière, de ladite pluralité d'impulsions acoustiques uniquement une impulsion acoustique étant présente dans le réflecteur de Bragg comprimé à un instant quelconque.

**27.** Le procédé selon la revendication 26, dans lequel chaque impulsion acoustique est réfléchie dans les deux sens entre deux points de réflexion dans la structure de guidage de lumière, chaque impulsion successive de ladite pluralité d'impulsions acoustiques étant envoyée vers la structure de guidage de lumière à l'instant où l'impulsion acoustique antérieure, après sa réflexion, atteint l'actionneur acoustique.

**28.** Le procédé selon la revendication 27, dans lequel le balayage de longueur d'onde obtenu par un passage d'une impulsion acoustique au travers du réflecteur de Bragg comprimé est utilisé conjointement avec un balayage de longueur d'onde subséquent pour une analyse spectrale du signal lumineux dirigé vers la structure de guidage de lumière.

**29.** Le procédé selon la revendication 28, dans lequel une corrélation entre différents balayages de longueur d'onde dans le signal de sortie de détecteur est exécutée de façon à interpréter lesdits signaux de sortie de détecteur de façon à assigner la sortie de détecteur à un instant donné à une longueur d'onde spécifique.

**30.** Le procédé selon la revendication 20, comprenant en outre l'étape de
préfiltrage de la lumière à diriger vers la structure de guidage de lumière au moyen d'un filtre à large bande, ledit filtre faisant passer essentiellement la même gamme de longueurs d'onde que celle que le réflecteur de Bragg comprimé réfléchit.

**31.** Le procédé selon la revendication 24, dans lequel le signal de sortie de détecteur est envoyé vers une unité logique, ladite unité logique traitant ledit signal de sortie de détecteur de façon à fournir un signal de sortie d'unité logique indicatif du spectre de puissance du signal lumineux dirigé vers la structure de

guidage de lumière.

R($\lambda_1$)<1  R($\lambda_2$)<1

P($t_1$)=P($\lambda_1$)
P($t_2$)=P($\lambda_2$)

$\Delta z(t=t_1)$

z

$\Delta z(t=t_2)$

z

Fig. 1

EP 1 303 784 B1

Fig. 2

Fig. 3

Fig. 4

Fig. 5

Fig. 6

EP 1 303 784 B1

Fig. 7

Fig. 8

EP 1 303 784 B1

Fig. 9

EP 1 303 784 B1

Time (arb. units)

Fig. 10

Fig. 11

**EP 1 303 784 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6052179 A
- US 5982963 A

**Non-patent literature cited in the description**

- A review of WDM technology and applications. *Opt. Fiber Technol.,* 1999, vol. 5, 3-39
- **M. C. HUTLEY.** Diffraction gratings. Academic Press, 1982
- **CHEN et al.** Superchirped moire grating based on an acousto-optic superlattice with a chirped fiber Bragg grating. *OPTICS LETTERS,* vol. 24 (22), 1558-1560